# EUROPÄISCHE PATENTANMELDUNG

(11) **EP 1 944 210 A2**
(43) Veröffentlichungstag der Anmeldung: **16.07.2008**
(21) Anmeldenummer: 07122378.8
(22) Anmeldetag: 05.12.2007
(51) Int. Cl.: B60S 1/34

(54) **Wischerantrieb für ein Fahrzeug und Verfahren zu seiner Herstellung**

(30) Priorität: 11.01.2007 DE 102007001647
(71) Anmelder: ROBERT BOSCH GMBH, 70442 Stuttgart (DE)
(72) Erfinder: Benner, Andreas, 77830 Buehlertal (DE); Hummel, Rainer, 77866 Rheinau (DE); Wickermann, Hans, 77815 Buehl (DE); Dietrich, Jan, 77815 Buehl (DE); Boos, Tino, 76532 Baden-Baden (DE); Dudek, Alexander, 77656 Offenburg (DE); Kraus, Achim, 77815, Buehl (DE)

(57) **Zusammenfassung**

Die Erfindung betrifft einen Wischerantrieb (11) für ein Fahrzeug, insbesondere Kraftfahrzeug, mit einer Antriebswelle (1), an der ein Antriebskurbelarm (14) festgelegt ist, wobei die Antriebswelle (1) einem Aufnahmedurchbruch (15) des Antriebskurbelarms (14) durchsetzt und mit einem freien Endbereich (9) aus dem Aufnahmedurchbruch (15), den Antriebskurbelarm (14) überragend, axial herausragt, und wobei der freie Endbereich (9) mit einem Befestigungsmittel zum Festlegen des Antriebskurbelarms (14) versehen ist. Es ist vorgesehen, dass das Befestigungsmittel eine durch im Wesentlichen radiales Rollieren des freien Endbereichs (9) gebildete Wulst (20) ist, die den Antriebskurbelarm (14) axial beaufschlagt und fixiert.

Weiter betrifft die Erfindung ein Verfahren zum Festlegen eines solchen Antriebskurbelarms (14).

## Beschreibung

Die Erfindung betrifft einen Wischerantrieb für ein Fahrzeug, insbesondere Kraftfahrzeug, nach Oberbegriff des Anspruchs 1.

Ferner betrifft die Erfindung ein Verfahren zur Herstellung des erfindungsgemäßen Wischerantriebs für ein Fahrzeug, insbesondere Kraftfahrzeug.

### Stand der Technik

Wischerantriebe für Fahrzeuge, insbesondere Kraftfahrzeuge, sind bekannt. Sie dienen dazu, Beaufschlagungen von Glasflächen (beispielsweise von Windschutzscheiben oder von Scheinwerfern) mit Niederschlag und/oder Schmutz und/oder Sprühfilm zu beseitigen. Hierzu wird ein Wischblatt in oszillierende Bewegung versetzt, wobei sich diese Bewegung gegebenenfalls periodisch wiederholt. Hierzu sind Wischerantriebe vorgesehen, die beispielsweise von Elektromotoren angetrieben werden und deren Aufgabe es ist, den Rundlauf des Elektromotors in eine (oszillierende) Wischblattbewegung umzusetzen. Die Drehbewegung des Elektromotors wird hierbei über einen Antriebskurbelarm auf das übrige Wischgestänge von einer Antriebswelle des Elektromotors beziehungsweise eines zwischen Elektromotor und Antriebskurbelarm geschalteten Getriebes übertragen. Üblicherweise wird der Antriebskurbelarm mittels eines Rändelkegels mit der Antriebswelle verbunden. Das Motormoment wird über Formschluss von an der Antriebswelle ausgebildeten Rändelzähnen auf den Antriebskurbelarm übertragen, wobei diese sich aufgrund der axialen Verspannung von Antriebswelle und Antriebskurbelarm verzahnen; diese Axialverspannung erfolgt im Stand der Technik üblicherweise über eine Sechskantmutter. Vereinzelt wird der Antriebskurbelarm auch auf einen Zylinderrändel aufgepresst, der an der Antriebswelle ausgebildet ist. Die axiale Sicherung erfolgt hierbei üblicherweise durch ein Vertaumeln des Wellenüberstandes, also ein "Breitdrücken" der Antriebswelle im Bereich des Durchdringungsbereichs der Antriebswelle durch den Antriebskurbelarm. Zum Vertaumeln muss die Antriebswelle indes axial abgestützt werden, um die sehr hohen Axialkräfte, die durch das zum Vertaumeln erforderliche Werkzeug aufgebracht werden, aufzunehmen. Daher sind in Antriebsgetrieben beziehungsweise in speziell hierfür eingerichteten Motoreinheiten an der dem Antriebskurbelarm gegenüberliegenden Seite der Antriebswelle Öffnungen von Getriebe- und/oder Motoreinheiten Gehäuse vorgesehen, die nach dem Vertaumeln mit einem zusätzlichen Deckel verschlossen werden müssen, wobei dies stets die Gefahr des Eindringens von Wasser und/oder von Schmiermittelsverlust bedeutet.

### Offenbarung der Erfindung

Aufgabe der Erfindung ist es, einen Wischerantrieb mit einer Anbindung eines Antriebskurbelarms an eine Antriebswelle bereitzustellen, die die genannten Nachteile vermeidet. Es soll hierbei eine Bauhöhenreduzierung und eine Minimierung der Anzahl von verwendeten Bauteilen sowie eine Minimierung der Fertigungskomplexität und Teilekomplexität erfolgen.

Hierzu wird ein Wischerantrieb für ein Fahrzeug, insbesondere Kraftfahrzeug, mit einer Antriebswelle vorgeschlagen, an der ein Antriebskurbelarm befestigt ist, wobei die Antriebswelle einen Aufnahmedurchbruch des Antriebskurbelarms durchsetzt und mit einem freien Endbereich aus dem Aufnahmedurchbruch, den Antriebskurbelarm überragend, axial herausragt, und wobei der freie Endbereich mit einem Befestigungsmittel zum Festlegen des Antriebskurbelarms versehen ist. Es ist vorgesehen, dass das Befestigungsmittel eine durch im Wesentlichen radiales Rollieren des freien Endbereichs gebildete Wulst ist, die den Antriebskurbelarm axial beaufschlagt und fixiert. Anstelle der im Stand der Technik gebräuchlichen Axialfixierung durch eine Sechskantmutter oder andere, geeignete Schraubenmuttern, die eine erhebliche Bauhöhe aufweisen und überdies ein in die Antriebswelle geschnittenes Gewinde benötigen, dient als Befestigungsmittel zur Axialfixierung des Antriebskurbelarmes hier eine Wulst, die in dem freien Endbereich ausgebildet wird, in dem die Antriebswelle den Antriebskurbelarm überragt. Dadurch, dass die Wulst den Antriebskurbelarm axial beaufschlagt, also unmittelbar an diesem anliegt, ergibt sich die Axialfixierung des Antriebskurbelarmes auf der Antriebswelle.

In einer weiteren Ausführungsform ist vorgesehen, dass die Antriebswelle eine Regenstufe aufweist, die einen Axialanschlag für den Antriebskurbelarm bildet. Mit Regenstufe ist gemeint, dass die Antriebswelle eine Durchmesserverkleinerung vorsieht, insbesondere so, dass in einem endseitigen Bereich der Antriebswelle, die zur Aufnahme des Antriebskurbelarmes vorgesehen ist, die Ringstufe ausgebildet wird, wobei die Ringstufe eine solche Durchmesserverkleinerung aufweist, dass ihr Durchmesser im Wesentlichen dem Durchmesser des Aufnahmedurchbruchs des Antriebskurbelarmes entspricht. Die Antriebswelle kann folglich bis zur Ringstufe in den Aufnahmedurchbruch des Antriebskurbelarms eingebracht werden. Bei Auflage auf die Ringstufe ist eine einseitige Axialfixierung gegeben. Die auf der anderen Seite noch erforderliche Axialfixierung (nämlich im freien Endbereich der Antriebswelle) erfolgt durch das oben erwähnte Rollieren mit Ausbildung der Wulst.

In einer weiteren Ausführungsform ist vorgesehen, dass die Antriebswelle vorzugsweise in dem Aufnahmedurchbruch liegenden Bereich eine Mitnahmerändelung zur drehfesten Verbindung zum Antriebskurbelarm aufweist. Eine Mitnahmerändelung ist hierbei eine Ausführung einer Oberfläche der Antriebswelle im Bereich des Aufnahmedurchbruchs dergestalt, dass diese Oberfläche zumindest bereichsweise so strukturiert ist, dass sich eine Klemmwirkung mit Kraftschluss (teilweise auch Formschluss) zwischen Antriebswelle und dem Innendurchmesser des Aufnahmedurchbruchs ergibt. Dies bedeutet insbesondere, dass die Oberfläche der Antriebswelle im Bereich des Aufnahmedurchbruchs eine Zahnung oder den Außendurchmesser der Antriebswelle überragende Vorsprünge aufweist, wobei der durch diese Zahnung oder Vorsprünge sich ergebende diametrale Durchmesser der Antriebswelle in diesem Bereich exakt gleich groß oder minimal größer als der Innendruchmesser des Aufnahmedurchbruchs ist. Es findet folglich ein Verkeilen der verwendeten Materialien statt.

In einer besonders bevorzugten Ausführungsform ist die Mitnahmerändelung eine Zylinderrändelung. Eine Zylinderrändelung ist eine solche Rändelung, bei der die Erhebungen und Vertiefungen, die die Rändelung bewirken, in Axialrichtung, also in Längserstreckung der Antriebswelle vorliegen. Insbesondere im Bereich der Ringstufe als dem Bereich, der im Aufnahmedurchbruch liegt, ist diese Zylinderrändelung vorgesehen. Sie erlaubt ein leichtes Einbringen des Antriebskurbelarms, wobei sich eine sehr sichere drehfeste Verbindung ergibt.

In einer anderen Ausführungsform ist vorgesehen, dass der freie Endbereich vor dem Rollieren einen Durchmesser aufweist, der kleiner als oder maximal gleich groß wie der Durchmesser des Aufnahmedurchbruchs ist. In dieser Ausführungsform wird sichergestellt, dass durch die gestufte Ausführungsform der Durchmesser des freien Endbereichs eine einfache Montage möglich ist, da die Einbringung in den Aufnahmedurchbruch des Antriebskurbelarms aufgrund des kleineren oder höchstens gleich großen Durchmessers leicht gelingt.

Weiter wird ein Verfahren vorgeschlagen zum Festlegen eines Antriebskurbelarms eines Wischerantriebs für ein Fahrzeug, insbesondere Kraftfahrzeug, an einer Antriebswelle, insbesondere zur Herstellung eines Wischerantriebs nach einer oder mehreren der vorstehend beschriebenen Ausführungsformen. Hierbei sind folgende Schritte vorgesehen:
- Einführen der Antriebswelle in einen Aufnahmedurchbruch des Antriebskurbelarms, derart, dass ein freier Endbereich die Antriebswelle aus dem Aufnahmedurchbruch, den Antriebskurbelarm überragend, axial herausragt,
- im Wesentlichen radiales Rollieren des freien Endbereichs und Ausbildung einer aus dem Material des freien Endbereichs gebildeten Wulst, die den Antriebskurbelarm axial beaufschlagt und fixiert.

Die Antriebswelle wird folglich in den Aufnahmedurchbruch des Antriebskurbelarms eingeführt, wobei der freie Endbereich der Antriebswelle aus dem Aufnahmedurchbruch axial herausragt und den Antriebskurbelarm überragt. Sodann wird der den Antriebskurbelarm überragende freie Endbereich radial rolliert, also durch Rollen, die den freien Endbereich unter Kraftbeaufschlagung umkreisen, verformt, wobei sich aus dem Material des freien Endbereichs eine Wulst ausbildet, die den Antriebskurbelarm axial beaufschlagt und fixiert. Die mindestens eine Rolle, die zum Rollieren des freien Endbereiches verwendet wird, umkreist den freien Endbereich (wobei auch eine feststehende Rolle und eine drehende Antriebswelle möglich wäre) und beaufschlagt den freien Endbereich in Richtung auf eine Längsachse der Antriebswelle, so dass das dort vorhandene Material verformt wird. Durch entsprechende Anordnung der Rolle während des Rollierens und/oder der Rollengeometrie wird bewirkt, dass aus dem Material des freien Endbereichs eine Wulst gebildet wird, die den Antriebsarm unmittelbar an den Aufnahmedurchbruch anschließend axial beaufschlagt und den Antriebskurbelarm folglich auf der Antriebswelle fixiert.

In einer besonders bevorzugten Ausführungsform des Verfahrens wird das Rollieren als ein zur Drehachse der Antriebswelle diametral gegenüberliegendes Rollieren durchgeführt. Hiermit ist gemeint, dass wenigstens zwei Rollen zum Rollieren verwendet werden, wobei sich diese diametral gegenüberliegen. Die von der jeweils einen Rolle erfolgende Kraftbeaufschlagung der Antriebswelle wird von der jeweils anderen Rolle aufgenommen. Auf diese Weise können unerwünschte Biegemomente der Antriebswelle während des Rollierens vermieden werden. Durch die Verwendung von mindestens zwei Rollen erfolgt auch eine wesentlich zügigere Bearbeitung und Ausbildung der gewünschten Wulst. Insgesamt ergibt sich durch das Rollieren ein einfacher, leicht zu überwachender Fertigungsprozess, der anders als beispielsweise Schweißen, keiner besonderen Beaufsichtigung und Sicherheitsvorkehrung bedarf. Weiter ergibt sich durch die Ausbildung der Axialfixierung als Wulst eine deutliche Bauhöhenreduzierung im Vergleich zu bekannten Befestigungsweisen, die ein Verschrauben beispielsweise mit Sechskantmuttern erfordern.

Weitere vorteilhafte Ausführungsformen ergeben sich aus den Unteransprüchen und aus Kombinationen derselben. Die Erfindung wird nachfolgend anhand von Zeichnungen näher erläutert.

### Kurze Beschreibung der Zeichnungen

Die Erfindung wird nachfolgend anhand von Figuren näher erläutert. Dazu zeigen
- Figur 1: eine Antriebswelle mit einer Ringstufe und einer Zylinderrändelung,
- Figur 2: einen an der Antriebswelle mittels einer Wulst festgelegten Antriebskurbelarm im Querschnitt und
- Figur 3: den Vorgang des Rollierens der Antriebswelle.

### Ausführungsform(en) der Erfindung

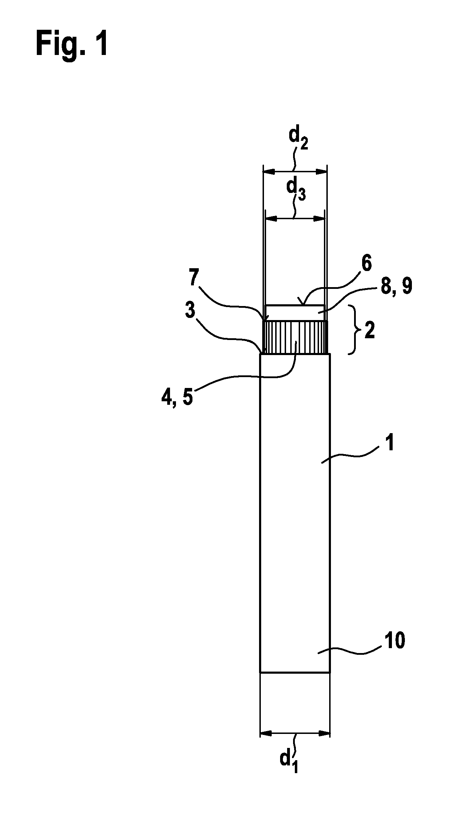

Figur 1 zeigt eine Antriebswelle 1, die einen Durchmesser d₁ aufweist. In ihrem oberen Endbereich 2 ist der Durchmesser d₁ zu einem Durchmesser d₂ reduziert, so dass eine Ringstufe 3 ausgebildet wird. Unmittelbar an die Ringstufe 3 anschließend weist die Antriebswelle 1 eine Mitnahmerändelung 4 auf, die als Zylinderrändelung 5 ausgebildet ist. Diese erstreckt sich im oberen Endbereich 2 von der Ringstufe 3 ausgehend axial in Richtung eines oberen Antriebswellenendes 6. In dem Bereich der Zylinderrändelung 5 weist die Antriebswelle 1 den Durchmesser d₂ auf. An die Zylinderrändelung 5 anschließend in Axialerstreckung in Richtung des oberen Antriebswellenendes 6 ist eine weitere Ringstufe 7 ausgebildet, von der ausgehend bis hin zum oberen Antriebswellenende 6 die Antriebswelle 1 einen wiederum reduzierten Durchmesser d₃ aufweist. Hierbei wird ein Antriebswellenabschnitt 8 mit dem Durchmesser d₃ ausgebildet, der als freier Endbereich 9 nach Montage einen hier nicht dargestellten Antriebskurbelarm überragt. Mit einem unteren Endbereich 10 ist die Antriebswelle 1 von einer hier nicht dargestellten Motor- und/oder Getriebeeinheit gehalten und wirkverbunden.

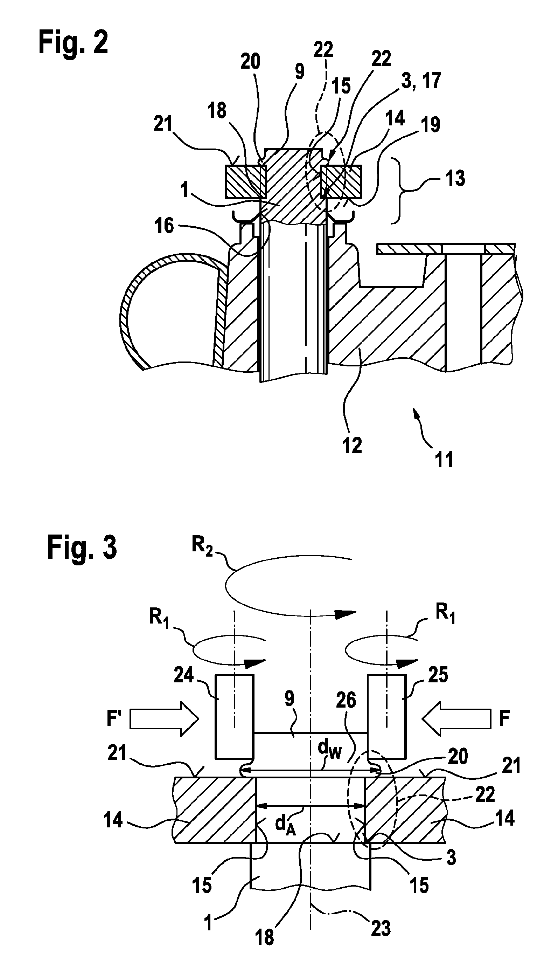

Figur 2 zeigt ausschnittsweise einen Wischerantrieb 11 für ein hier nicht dargestelltes Fahrzeug. Von einer Motor-/Getriebeeinheit 12 wird die Antriebswelle 1 gehalten und angetrieben. Die Antriebswelle 1 überragt die Motor-/Getriebeeinheit 12 mit einem Anschlussbereich 13; der nicht als Anschlussbereich 13 dienende Teil der Antriebswelle 1 befindet sich innerhalb der Motor-/Getriebeeinheit 12 gelagert. Im Anschlussbereich 13 der Antriebswelle 1 ist ein Antriebskurbelarm 14 dergestalt auf die Antriebswelle 1 aufgebracht, dass die Antriebswelle 1 eine an dem Antriebskurbelarm 14 angebrachten Aufnahmendurchbruch 15 durchdringt, wobei ihr freier Endbereich 9 den Aufnahmedurchbruch 15 und den Antriebskurbelarm 14 überragt. Zwischen Motor-/Getriebeeinheit 12 und einem hieran angeordneten Antriebswellenauslass 16 und dem auf der Antriebswelle 1 angeordneten Antriebskurbelarm 14 weist die Antriebswelle 1 die Ringstufe 3 auf, die als Auflage 17 für den Antriebskurbelarm 14 auf der Antriebswelle 1 dient. Die als Auflage 17 ausgebildete Ringstufe 3 bildet einen Axialanschlag 18 für den Antriebskurbelarm 14 auf der Antriebswelle 1 auf. Der Antriebskurbelarm 14 liegt mit seiner Antriebskurbelarmunterseite 19 auf dieser als Axialanschlag 18 ausgebildeten Ringfuge 3 auf. Im freien Endbereich 9 der Antriebswelle 1 ist eine Wulst 20 ausgebildet, die den Antriebskurbelarm 14 auf seiner Antriebskurbelarmoberseite 21 beaufschlagt. Der Antriebskurbelarm 14 wird folglich an seiner Antriebskurbelarmunterseite 19 von dem Axialanschlag 18, nämlich die Ringstufe 3, und an seiner Antriebskurbelarmoberseite 21 von der Wulst 20 unmittelbar beaufschlagt und hierdurch axial gehalten. Der Axialanschlag 18 und die Wulst 20 bilden zusammen eine Axialsicherung 22 für den Antriebskurbelarm 14 auf der Antriebswelle 1 aus.

Figur 3 zeigt den Vorgang des Rollierens zur Ausbildung der Wulst 20 am freien Endbereich 9 der Antriebswelle 1, die den Aufnahmedurchbruch 15 des Antriebskurbelarms 14 durchdringt. Hierzu wird der freie Endbereich 9 in Radialrichtung, nämlich in Richtung auf eine Antriebswellenachse 23 im Wesentlichen radial über eine erste Rollierrolle 24 und eine zweite Rollierrolle 25 mit einer Rollierkraft F und F' beaufschlagt, wobei sich die erste Rollierrolle 24 und die zweite Rollierrolle 25 bezogen auf die Antriebswellenachse 23 diametral gegenüberstehen, so dass keine Biegemomente auf die Antriebswelle 1 ausgeübt werden, die anderenfalls abgestützt werden müssten (auf der der Kraftbeaufschlagung gegenüberliegenden Seite der Antriebswelle 1) oder die ansonsten zu einer Verformung der Antriebswelle 1 führen könnten.

Die erste Rollierrolle 24 und die zweite Rollierrolle 25 rotieren hierzu um die Antriebswelle 1 umlaufend jeweils mit einer eigenen Rotation R₁, wobei der Umlauf der ersten und zweiten Rollierrolle 24, 25 um die Antriebswelle 1 eine Rotation R₂ darstellt. Während der Rotation R₂ und der mit der Kraft F und F' erfolgenden Kraftbeaufschlagung der ersten Rollierrolle 24 und der zweiten Rollierrolle 25 in Richtung der Axialwellenachse 23 findet eine Verformung von Material 26 im freien Endbereich 9 statt, wobei sich der Wulst 20 ausbildet und den Antriebskurbelarm 14 an seiner Antriebskurbelarmoberseite 21 beaufschlagt, wobei eine Durchmesservergrößerung im Bereich des freien Endbereichs 9 der Antriebswelle 1 durch die Ausbildung der Wulst 20 erfolgt, dergestalt, dass der Wulstdurchmesser d_{W} größer ist als der Durchmesser d_{A} des Aufnahmedurchbruchs 15. Somit wird durch die an der Antriebswelle 1 ausgebildete Ringstufe 3 als Axialanschlag 18 einerseits und die Wulst 20 andererseits die Axialsicherung 22 ausgebildet.

## Patentansprüche

1. Wischerantrieb für ein Fahrzeug, insbesondere Kraftfahrzeug, mit einer Antriebswelle, an der ein Antriebskurbelarm festgelegt ist, wobei die Antriebswelle einen Aufnahmedurchbruch des Antriebskurbelarms durchsetzt und mit einem freien Endbereich aus dem Aufnahmedurchbruch, den Antriebskurbelarm überragend, axial herausragt, und wobei der freie Endbereich mit einem Befestigungsmittel zum Festlegen des Antriebskurbelarms versehen ist, **dadurch gekennzeichnet, dass** das Befestigungsmittel eine durch im Wesentlichen radiales Rollieren des freien Endbereichs (9) gebildete Wulst (20) ist, die den Antriebskurbelarm (14) axial beaufschlagt und fixiert.

2. Wischerantrieb nach Anspruch 1, **dadurch gekennzeichnet, dass** die Antriebswelle (1) eine Ringstufe (3) aufweist, die einen Axialanschlag (18) für den Antriebskurbelarm (14) bildet.

3. Wischerantrieb nach einem der vorhergehenden Ansprüche, **dadurch gekennzeichnet, dass** die Antriebswelle (1) vorzugsweise in ihrem in dem Aufnahmedurchbruch (15) liegenden Bereich eine Mitnahmerändelung (4) zur drehfesten Verbindung zum Antriebskurbelarm (14) aufweist.

4. Wischerantrieb nach einem der vorhergehenden Ansprüche, **dadurch gekennzeichnet, dass** die Mitnahmerändelung (4) eine Zylinderrändelung (5) ist.

5. Wischerantrieb nach einem der vorhergehenden Ansprüche, **dadurch gekennzeichnet, dass** der freie Endbereich (9) vor dem Rollieren einen Durchmesser (d₃) aufweist, der kleiner als oder maximal gleich groß wie der Durchmesser (d_{A}) des Aufnahmedurchbruchs (15) ist.

6. Verfahren zum Festlegen eines Antriebskurbelarms eines Wischerantriebs für ein Fahrzeug, insbesondere Kraftfahrzeug, an einer Antriebswelle, insbesondere zur Herstellung eines Wischerantriebs nach einem oder mehreren der vorhergehenden Ansprüche, mit folgenden Schritten:
- Einführen der Antriebswelle in einen Aufnahmedurchbruch des Antriebskurbelarms, derart, dass ein freier Endbereich der Antriebswelle aus dem Aufnahmedurchbruch, den Antriebskurbelarm überragend, axial herausragt,
- im Wesentlichen radiales Rollieren des freien Endbereichs und Ausbildung einer aus dem Material des freien Endbereichs gebildeten Wulst, die den Antriebskurbelarm axial beaufschlagt und fixiert.

7. Verfahren nach Anspruch 6, **dadurch gekennzeichnet, dass** das Rollieren als ein zur Drehachse der Antriebswelle diametral gegenüberliegendes Rollieren durchgeführt wird.
